# FASCICULE DE BREVET EUROPEEN

(11) **EP 2 013 524 B1**
(45) Date de publication et mention de la délivrance du brevet: **07.11.2012**
(21) Numéro de dépôt: 07731363.3
(22) Date de dépôt: 26.04.2007
(51) Int. Cl.: F16L 37/084, F16L 37/14

(54) **RACCORD A DOUBLE VERROUILLAGE**
DOPPELT VERRIEGELNDER VERBINDER
DOUBLE-LOCKING CONNECTOR

(30) Priorité: 28.04.2006 FR 0603840
(43) Date de publication de la demande: 14.01.2009
(73) Titulaire: PARKER HANNIFIN MANUFACTURING France SAS, 74100 Ville-la-Grand (FR)
(72) Inventeur: BLIVET, Philippe, F-35200 Rennes (FR); PODER, Philippe, F-35580 Guichen (FR); LE QUERE, Philippe, F-35830 Betton (FR)
(74) Mandataire: Lavialle, Bruno François Stéphane
(86) Numéro de dépôt international: PCT/FR2007/000705
(87) Numéro de publication internationale: WO 2007/128907

(56) Documents cités:
- EP-A- 1 582 800
- EP-A1- 0 743 481
- EP-A1- 1 359 361
- WO-A-96/34224
- WO-A-02/052188
- US-A1- 3 574 359
- US-A1- 2005 161 942

## Description

La présente invention concerne un raccord pour connecter un élément de circuit de transport de fluide à un embout tubulaire pourvu extérieurement d'une collerette. L'élément de circuit peut être un élément émetteur ou récepteur de fluide tel qu'une pompe, une conduite, un réservoir, un distributeur, un actionneur... L'embout tubulaire peut être associé à un autre élément de circuit tel que ceux précités.

### ARRIERE PLAN DE L'INVENTION

Un raccord comprend généralement un corps tubulaire comportant des moyens de sa liaison à l'élément de circuit et un logement pour recevoir l'embout. Le logement est pourvu d'un organe d'étanchéité et de moyens d'assujettissement de l'embout dans le logement. Les moyens d'assujettissement se divisent en deux groupes principaux, à savoir les moyens à connexion instantanée et les moyens à connexion non instantanée.

Les moyens à connexion instantanée comprennent généralement un verrou monté sur le corps pour être mobile radialement entre une position en saillie dans le logement pour retenir la collerette et une position escamotée du logement pour libérer la collerette. Le verrou comprend un élément élastique de rappel dans sa position de retenue. Le verrou et la collerette sont conformés de telle manière que, lors de l'introduction de l'embout dans le logement, la collerette rencontre le verrou en position de retenue et coopère par frottement avec le verrou pour amener celui-ci dans sa position escamotée à l'encontre de la force de rappel, libérant ainsi le passage à la collerette, avant que le verrou revienne élastiquement dans sa position de retenue une fois la collerette passée.

Les raccords équipés de moyens à connexion instantanée sont intéressants car ils permettent la réalisation d'une connexion automatique de l'embout au corps sans nécessiter de manipulation autre que l'introduction de l'embout dans le corps. L'élément de rappel du verrou en position de retenue s'oppose au mouvement du verrou vers sa position de libération à la fois lors de l'introduction de l'embout dans le corps et lors d'une tentative d'extraction de l'embout hors du corps (même si dans ce dernier cas les surfaces en contact de la collerette et du verrou sont le plus radiales possible pour limiter le soulèvement du verrou). Le calcul de la force de rappel résulte ainsi d'un compromis entre l'obtention d'un effort d'introduction suffisamment faible pour permettre une connexion manuelle et d'une résistance maximale à l'extraction de l'embout. Il en résulte que ces raccords offrent généralement une résistance à l'arrachement de l'embout insuffisante dans des applications à fortes contraintes comme lorsque la pression du fluide transporté est élevée et lorsque le raccord et l'embout sont soumis à des sollicitations mécaniques importantes.

Dans de telles applications, on utilise généralement des moyens de connexion non instantanés comportant un cavalier (ou agrafe) encliqueté dans le corps et déplaçable par un opérateur, à travers une ouverture latérale ménagée dans la paroi du logement recevant l'embout, entre une position de retenue de la collerette de l'embout et une position de libération de l'embout. EP1359 361 décrit un tel raccord.

La résistance à l'arrachement des embouts dans de tels raccords est relativement bonne mais peut être améliorée.

### OBJET DE L'INVENTION

L'invention a ainsi comme objet un raccord présentant une résistance à l'arrachement améliorée et limitant les risques d'une déconnexion accidentelle à la suite d'une erreur de manipulation.

### RESUME DE L'INVENTION

A cet effet, on prévoit, selon l'invention, un raccord pour connecter un élément de circuit à un embout tubulaire pourvu extérieurement d'une collerette, le raccord comprenant un corps tubulaire comportant des moyens de sa liaison à l'élément de circuit et un logement pour recevoir l'embout, le logement étant pourvu d'un organe d'étanchéité et étant délimité par une paroi percée d'une ouverture latérale recevant un cavalier mobile transversalement par rapport au corps entre une position en saillie de retenue de la collerette de l'embout et une position escamotée de libération de la collerette, le corps comprenant un organe de verrouillage du cavalier en position de retenue, l'organe de verrouillage étant monté sur le corps pour être mobile entre une position d'accrochage du cavalier et une position de dégagement du cavalier.

Ainsi, l'organe de verrouillage en position d'accrochage immobilise le cavalier qui est ainsi maintenu de façon positive dans sa position de retenue.

L'organe de verrouillage est une bague articulée sur la paroi du logement de manière à s'étendre coaxialement au logement en position d'accrochage et à basculer en position de libération depuis la position d'accrochage.

L'organe de verrouillage a ainsi une structure simple d'encombrement limité.

De préférence, la bague possède une languette en saillie axiale et, lorsque la bague est en position d'accrochage, la languette s'étend en saillie dans l'ouverture latérale pour coopérer avec le cavalier en position de retenue de manière à s'opposer à un mouvement du cavalier vers sa position de libération et avantageusement, la bague étant rappelée vers sa position de dégagement, la languette est déformable élastiquement en flexion de manière que, lorsque la languette est déformée, la bague délimite un passage de section inférieure à une section de la collerette, et la languette comporte un redan coopérant avec un relief de la paroi du logement pour retenir la bague en position d'accrochage.

Ainsi, lorsque la bague est dans sa position d'accrochage et que le cavalier est amené de sa position de libération à sa position de retenue, le cavalier déforme la languette qui se dégage du relief de la paroi de sorte que la bague est rappelée en position de dégagement. Le déplacement de la bague vers sa position de dégagement indique à l'opérateur que la collerette a dépassé la bague (puisque la languette a pu se déformer) et le cavalier (puisque le cavalier a pu descendre en position de retenue). L'opérateur est ainsi informé de la réalisation correcte de la connexion.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue en perspective d'un raccord conforme à l'invention,
- la figure 2 est une vue partielle de ce raccord dans un état non connecté à l'embout, en coupe longitudinale selon le plan II de la figure 1,
- les figures 3 à 6 sont des vues, analogues à celle de la figure 2, qui illustrent les phases successives de la connexion d'un embout au raccord de l'invention,
- la figure 7 est une vue analogue à celle de la figure 2 du raccord connecté à un embout après mise sous pression du circuit dans lequel le raccord et l'embout sont implantés,
- la figure 8 est une vue du raccord de l'invention sans embout, en coupe selon la ligne VIII-VIII de la figure 3,
- la figure 9 est une vue du raccord de l'invention sans embout, en coupe selon la ligne IX-IX de la figure 5.

### DESCRIPTION DETAILLEE DE L'INVENTION

En référence aux figures, le raccord conforme à l'invention, généralement désigné en 1, est destiné à connecter un canal 101 d'un élément de circuit 100 à un canal 201 d'un élément de circuit 200 comportant un embout 202 tubulaire et pourvu extérieurement d'une collerette 203. L'élément de circuit 100 est ici une canalisation. L'élément de circuit 200 est ici un élément émetteur ou récepteur de fluide dont l'embout 202 est solidaire.

Le raccord 1 comprend un corps 2, tubulaire, axialement divisé en une première section 2.1 destinée à être raccordée à l'élément de circuit 100 et une deuxième section 2.2 destinée à être raccordée à l'embout 202.

La section 2.1 est ici pourvue extérieurement de reliefs en dents de sapin et destinée à être introduite à force dans le canal 101 de l'élément de circuit 100. La section 2.1 peut avoir d'autres formes et par exemple avoir la forme d'une tétine, ou être identique à la section 2.2, ou incorporer des moyens de raccordement instantané...

La section 2.2 comprend un alésage étagé 3 comprenant un tronçon final 3.1, situé du côté de la section 2.1, pour recevoir l'extrémité de l'embout 202 et un tronçon d'entrée 3.2 débouchant à l'extérieur du corps 2 du raccord 1 par une ouverture 3.3 pour permettre l'introduction de l'embout 202 dans le logement 3. Le tronçon d'entrée 3.2 reçoit coaxialement un insert de blocage 4, de forme tubulaire, ayant un diamètre interne sensiblement égal au diamètre externe de l'embout 202 et un organe d'étanchéité 5 s'étendant entre l'insert de blocage 4 et un épaulement 6 reliant le tronçon d'entrée 3.2 au tronçon final 3.1. Le tronçon d'entrée 3.2 est délimité par une paroi 7 du corps 2 dans laquelle est ménagée une ouverture latérale 8 du côté de l'ouverture 3.3. L'ouverture latérale 8, de forme rectangulaire, est délimitée du côté de l'ouverture 3.3 par un bord 9 formé d'une surface transversale au corps 2.

Un cavalier généralement désigné en 10 est reçu dans l'ouverture latérale 8.

Le cavalier 10 a une forme en U inversé comportant une partie interne 11 en arc de cercle présentant un diamètre interne légèrement supérieur au diamètre externe de l'embout 202 et deux branches 12 parallèles et espacées d'une distance légèrement supérieure au diamètre externe de la collerette 203 de l'embout 202. La partie interne 11 est suffisamment ouverte pour pouvoir être engagée latéralement sur l'embout 202. Chaque branche 12 possède une extrémité libre pourvue extérieurement d'un redan, ici une dent 13, et une partie centrale pourvue extérieurement d'un renflement 14.

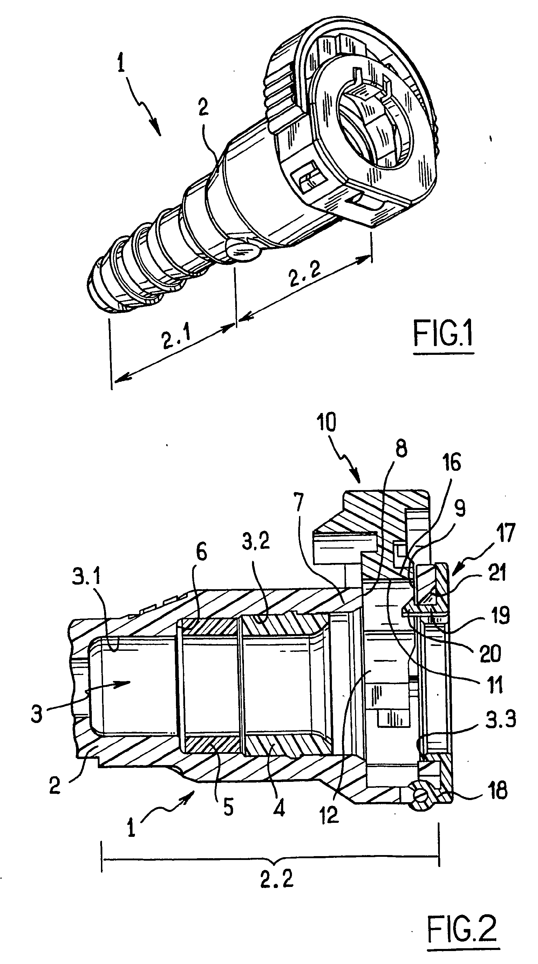

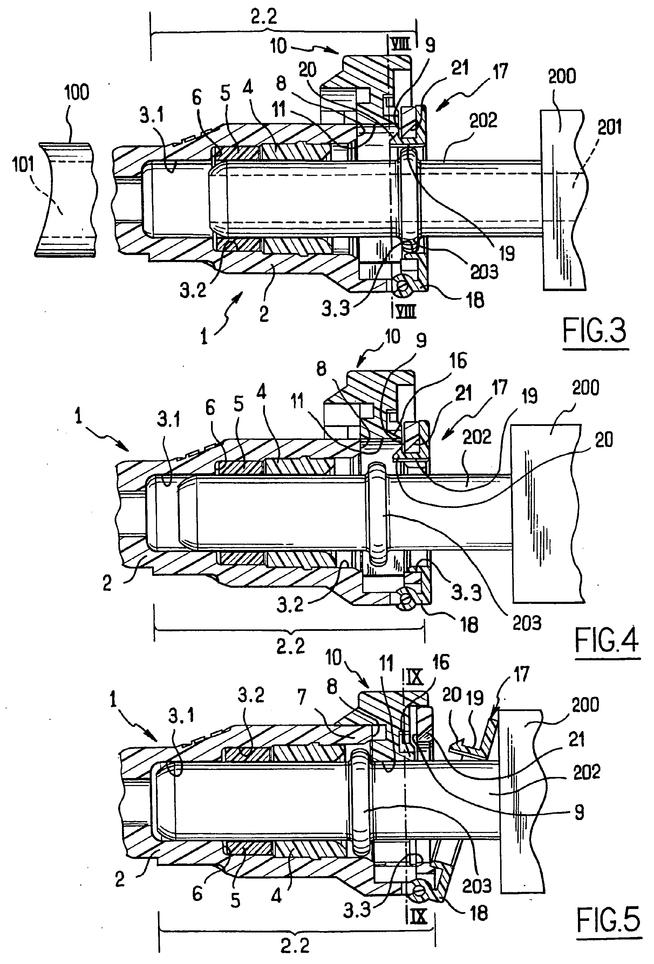

Le cavalier 10 est mobile transversalement au corps 1 dans l'ouverture latérale 8 entre une position de retenue (figures 5, 6, 7 et 9) dans laquelle la partie interne 11 s'étend en saillie dans le tronçon d'entrée 3.2 et délimite un passage de section inférieure à la section de la collerette 203 et une position de libération (figures 2, 3, 4 et 8) dans laquelle la partie interne 11 est escamotée du tronçon d'entrée 3.2 pour laisser passer la collerette 203.

Le cavalier 10 est maintenu en position de libération par deux reliefs 15 du corps 2 en saillie dans le tronçon d'entrée 3.2 et reçus chacun entre la dent 13 et le renflement 14 d'une des branches 12.

Lorsque le cavalier 10 passe de sa position de libération à sa position de retenue, les reliefs 15 frottent contre les renflements 14 pour passer d'un côté de ceux-ci opposé aux dents 13. Le passage des renflements 14 constitue un point dur dans le mouvement du cavalier 10 entre la position de retenue et la position de libération.

Les dents 13 et les renflements 14 constituent des moyens d'encliquetage ou de clipsage du cavalier 10 dans le corps 2 dont l'agencement permet de retenir le cavalier 10 élastiquement dans le corps 2 en position de retenue et en position de libération.

Le cavalier 10 comprend une portion de couronne 16 s'étendant en saillie axiale de la partie interne 11 du cavalier 10 en direction de l'ouverture 3.3. La portion de couronne 11 a un diamètre externe légèrement inférieur au diamètre du tronçon 3.2 du logement 3.

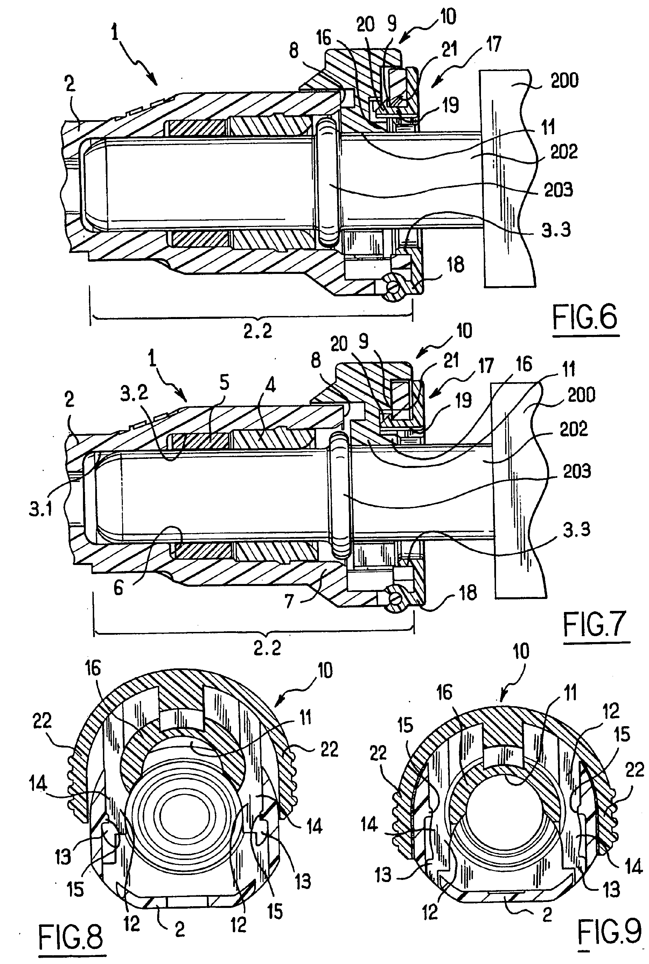

Le cavalier 10, en position de retenue, est mobile axialement entre une position déverrouillée (figure 6) et une position verrouillée (figure 7) successive dans un sens d'éloignement par rapport à l'insert de blocage 4. En position verrouillée, le cavalier a reculé vers l'ouverture 3.3 de sorte que la portion de couronne 16 s'enfonce d'une longueur d dans l'ouverture 3.3. La portion de couronne 16 passe alors sous la paroi 7 au voisinage du bord 9 de l'ouverture latérale 8 de sorte que le bord 9 de l'ouverture latérale 8 s'oppose au retour du cavalier 10 dans sa position de libération. En position déverrouillée, la portion de couronne 16 est dégagée de l'ouverture 3.3 et de ce bord 9 de sorte que le cavalier 10 peut être amené dans sa position de libération.

A l'extrémité libre de la section 2.2 du corps 2, est montée une bague de verrouillage, généralement désignée en 17, comportant un bord 18 articulé sur la face terminale du corps 2 entre une position d'accrochage dans laquelle la bague 17 est coaxiale au tronçon d'entrée 3.2 du logement 3 et une position de dégagement dans laquelle la bague 17 est basculée. La bague 17 comporte, à l'opposé du bord 18, une languette 19, déformable élastiquement en flexion, s'étendant en saillie axiale du pourtour interne de la bague 17 et ayant une extrémité libre pourvue extérieurement d'un redan 20. La déformabilité de la languette 19 est telle que, lorsque la languette est déformée, la bague délimite un passage de section inférieure à une section de la collerette. La languette 19 passe dans l'ouverture 3.3 et est reçue dans le tronçon d'entrée 3.2 et a son extrémité libre en saillie dans l'ouverture latérale 8 lorsque la bague 17 est en position d'accrochage. Le redan 20 s'étend alors derrière le bord 9 de l'ouverture latérale 8 et présente une face arrière radiale en butée contre le bord 9 pour s'opposer au basculement de la bague 17 en position de dégagement.

Le redan 20 comprend une face avant inclinée en forme de rampe pour coopérer par frottement d'une part avec la partie interne de la portion de couronne 16 et d'autre part avec une surface biseautée 21 du bord de l'ouverture 3.3 comme cela sera expliqué ci-après.

Le fonctionnement du raccord selon l'invention va maintenant être décrit.

Avant la connexion de l'embout au raccord, le cavalier 10 est en position de libération et la bague de verrouillage 17 est en position d'accrochage (voir la figure 2).

Lorsqu'un opérateur commence à introduire l'embout 202 dans le corps 2 du raccord 1, il sait que tant qu'il voit la collerette 203, la connexion n'est pas réalisée. Lorsque la collerette 203 est dans la bague de verrouillage 19, la collerette 203 s'oppose à la flexion de la languette 19 qui s'oppose à la descente du cavalier 10 dans sa position de retenue (voir la figure 3). Ainsi, en cas d'inattention, l'opérateur ne voyant plus la collerette 203, masquée par la bague de verrouillage 17, ne peut amener le cavalier 10 en position de retenue pour réaliser une connexion. Le risque d'une erreur de connexion est ainsi limité.

Le mouvement de l'introduction de l'embout 202 se poursuivant, la descente du cavalier 10 dans sa position de retenue n'est pas possible tant que la collerette 203 se trouve en regard du cavalier 10 (voir la figure 4), la partie interne 11 du cavalier 10 venant buter contre la collerette 203 avant de parvenir dans sa position de retenue.

Lorsque la collerette 203 vient buter contre l'insert de blocage 4, le mouvement d'introduction ne peut se poursuivre, et l'opérateur peut amener le cavalier 10 en position de retenue. Le cavalier 10, lors de son mouvement vers sa position de retenue, a rencontré la face avant du redan 20 de la languette 19 et a provoqué à la fois une flexion de la languette 19 et un mouvement de basculement de la bague 17. Lorsque la face avant du redan 20 échappe à la partie interne de la portion de couronne 16 du cavalier 10, la face avant du redan 20 se trouve en regard de la surface biseautée 21 et frotte contre cette surface biseautée 21. La languette 19 revenant élastiquement dans son état non déformé, le frottement de la face avant du redan 20 contre la surface biseautée 21 accentue le basculement de la bague de verrouillage 17. Il est ainsi réalisé une éjection de la bague de verrouillage 17 de sa position d'accrochage vers sa position de dégagement (voir la figure 5) qui signale à l'opérateur que la retenue de la collerette 203 est effective. L'opérateur peut lâcher le cavalier 10 à ce moment. Le cavalier 10 reste en position de retenue, la pression des renflements 14 sur les reliefs 15 du logement 3.2 s'opposant à un retour accidentel du cavalier 10 vers sa position de libération.

L'opérateur ramène alors la bague de verrouillage 17 en position d'accrochage (voir la figure 6) de telle manière que l'extrémité libre de la languette 19 s'étend en saillie dans l'ouverture latérale 8 au-dessus de la portion de couronne 16 et s'oppose à un mouvement du cavalier 10 vers sa position de libération.

Lors de la mise sous pression du circuit dans lequel sont implantés les éléments 100 et 200, l'embout 202 a tendance à reculer et amène le cavalier 10 en position verrouillée (voir la figure 7). La portion de couronne 16 s'étend alors non plus seulement sous la languette 19 mais également sous le bord 9 délimitant l'ouverture latérale 8, ce qui interdit le retour du cavalier 10 en position de libération.

Une déconnexion est possible en faisant basculer la bague 17 en position de dégagement et en ramenant le cavalier 10 en position de libération. On notera que le cavalier 10 comporte des ailes 22 s'étendant de part et d'autre du corps 2 lorsque le cavalier 10 est en position de retenue pour permettre la manipulation du cavalier 10.

Bien entendu, l'invention n'est pas limitée au mode de réalisation décrit et on peut y apporter des variantes de réalisation sans sortir du cadre de l'invention tel que défini par les revendications.

En particulier, le corps du raccord peut avoir une forme différente de celle décrite : le logement peut comprendre plus de deux tronçons, l'insert de blocage et l'élément d'étanchéité peuvent avoir des formes différentes... L'organe de verrouillage peut également avoir une structure différente de celle décrite et par exemple comprendre un taquet monté sur la surface externe du corps 2 pour coulisser entre les positions de retenue et de libération.

La languette 19 peut coopérer avec tout type de relief pour retenir la bague de verrouillage 17 en position de retenue et par exemple un renfoncement ménagé dans la paroi 7 au voisinage de l'ouverture 3.3.

La longueur d peut être plus importante que celle représentée sur la figure 7.

Bien que dans le mode de réalisation, le cavalier est pourvu de moyens de son encliquetage dans le corps, agencés de telle manière que le cavalier soit retenu élastiquement dans le corps en position de retenue et en position de libération, les moyens de retenue sur le corps du cavalier en position de libération peuvent fonctionner par encliquetage ou autre tel qu'une simple butée s'opposant à un retrait total du cavalier.

## Revendications

1. Raccord pour connecter un élément de circuit (100) à un embout (202) tubulaire pourvu extérieurement d'une collerette (203), le raccord comprenant un corps (2) tubulaire comportant des moyens (2.1) de sa liaison à l'élément de circuit et un logement (3) pour recevoir l'embout, le logement étant pourvu d'un organe d'étanchéité (5) et étant délimité par une paroi (7) percée d'une ouverture latérale (8) recevant un cavalier (10) mobile transversalement par rapport au corps entre une position en saillie de retenue de la collerette de l'embout et une position escamotée de libération de la collerette, le corps comprenant un organe de verrouillage (17) du cavalier en position de retenue, l'organe de verrouillage étant monté mobile sur le corps entre une position d'accrochage du cavalier et une position de dégagement du cavalier, **caractérisé en ce que**
l'organe de verrouillage est une bague (17) articulée sur la paroi (7) du logement (3) de manière à s'étendre coaxialement au logement en position d'accrochage et à basculer en position de libération depuis la position d'accrochage.

2. Raccord selon la revendication 1, dans lequel la bague (17) possède une languette (19) en saillie axiale et, lorsque la bague est en position d'accrochage, la languette s'étend en saillie dans l'ouverture latérale (8) pour coopérer avec le cavalier (10) en position de retenue de manière à s'opposer à un mouvement du cavalier vers sa position de libération.

3. Raccord selon la revendication 2, dans lequel, la bague (17) étant rappelée vers sa position de dégagement, la languette (19) est déformable élastiquement en flexion de manière que, lorsque la languette est déformée, la bague délimite un passage de 20section inférieure à une section de la collerette, et la languette comporte un redan (20) coopérant avec un relief (9) de la paroi (7) du logement (3) pour retenir la bague en position d'accrochage.

4. Raccord selon la revendication 3, dans lequel le relief de la paroi (7) du logement (3) est formée d'un bord (9) de l'ouverture latérale (8).

5. Raccord selon la revendication 1, dans lequel le cavalier (10) en position de retenue est mobile axialement entre une position verrouillée dans laquelle le cavalier a une portion de butée (16) engagée sous un bord (9) de l'ouverture latérale (8) et une position déverrouillée dans laquelle la portion de butée échappe au bord de l'ouverture latérale.

6. Raccord selon la revendication 1, comprenant des moyens de retenue sur le corps du cavalier en position de libération.

7. Raccord selon la revendication 6, dans lequel le cavalier (10) est pourvu de moyens (13, 14) de son encliquetage dans le corps (2), agencés de telle manière que le cavalier soit retenu élastiquement dans le corps en position de retenue et en position de libération.

## Claims

1. A connector for connecting a circuit element (100) to a tubular endpiece (202) provided with an external collar (203), the connector comprising a tubular body (2) including means (2.1) for connecting it to the circuit element and a housing (3) to receive the endpiece, the housing being provided with a sealing member (5) and being defined by a wall (7) pierced by a lateral opening (8) receiving a jumper (10) that is movable transversely of the body between a projecting position for retaining the collar of the endpiece and a retracted position for releasing the collar, the body including a member (17) for locking the jumper in the retaining position, the locking member being mounted on the body such that it is movable between a position that engages the jumper and a position that disengages the jumper, **characterized in that** the locking member is a ring (17) hinged on the wall (7) of the housing (3) in a manner such that it extends coaxially to the housing in the engaged position and flips into the released position from the engaged position.

2. A connector according to claim 1, wherein the ring (17) has an axially projecting tab (19) and, when the ring is in the engaged position, the tab projects into the lateral opening (8) to cooperate with the jumper (10) in the retaining position so as to oppose movement of the jumper towards its releasing position.

3. A connector according to claim 2, wherein, since the ring (17) is urged towards its disengaged position, the tab (19) can bend resiliently such that when the tab is deformed, the ring defines a through cross-section that is smaller than a section of the collar and the tab comprises a step (20) cooperating with a portion in relief (9) of the wall (7) of the housing (3) to retain the ring in the engaged position.

4. A connector according to claim 3, wherein the portion in relief of the wall (7) of the housing (3) is formed by an edge (9) of the lateral opening (8).

5. A connector according to claim 1, wherein the jumper (10) in the retaining position is axially movable between a locked position in which the jumper has an abutment portion (16) engaged under an edge (9) of the lateral opening (8) and an unlocked position in which the abutment portion escapes from the edge of the lateral opening.

6. A connector according to claim 1, comprising means on the body of the jumper for retaining it in the releasing position.

7. A connector according to claim 6, wherein the jumper (10) is provided with means (13, 14) for snap fitting it into the body (2), arranged such that the jumper is retained resiliently in the body in the retaining position and in the releasing position.

## Patentansprüche

1. Verbinder zum Verbinden eines Leitungselements (100) mit einem rohrförmigen Ansatzstück (202), das an der Außenseite mit einem Bund (203) versehen ist, wobei der Verbinder ein rohrförmiges Gehäuse (2) umfasst mit Mitteln (2.1) zu seiner Verbindung mit dem Leitungselement und mit einer Aufnahme (3) zum Aufnehmen des Ansatzstückes, wobei die Aufnahme mit einem Dichtelement (5) versehen und durch eine Wand (7) begrenzt ist, die von einer seitlichen Öffnung (8) durchdrungen ist, die einen Schieber (10) aufnimmt, der quer relativ zum Gehäuse zwischen einer eingerückten Rückhalteposition zum Zurückhalten des Bundes des Ansatzstückes und einer ausgerüclcten Freigabeposition des Bundes beweglich ist, wobei das Gehäuse ein Verriegelungsorgan (17) zum Verriegeln des Schiebers in der Rückhalteposition umfasst, wobei das Verriegelungsorgan beweglich zwischen einer Eingriffsposition zum Festhalten des Schiebers und einer Freigabeposition zur Freigabe des Schiebers an dem Gehäuse angebracht ist, **dadurch gekennzeichnet, dass** das Verriegelungsorgan ein Ring (17) ist, der an der Wand (7) der Aufnahme (3) so angelenkt ist, dass er sich in der Eingriffsposition koaxial zur Aufnahme erstreckt und aus der Eingriffsposition in eine Freigabeposition schwenkt.

2. Verbinder gemäß Anspruch 1, bei dem der Ring (17) eine axial überstehende Zunge (19) besitzt und bei dem, wenn sich der Ring in der Eingriffsposition befindet, sich die Zunge in die seitliche Öffnung (8) hinein erstreckt, um mit dem Schieber (10) in der Rückhalteposition desselben zusammenzuwirken, um sich einer Bewegung des Schiebers in Richtung seiner Freigabeposition zu widersetzen.

3. Verbinder nach Anspruch 2, bei dem bei der Verstellung des Ringes (17) in seine Freigabeposition die Zunge biegeelastisch so verformbar ist, dass, wenn die Zunge verformt wird, der Ring einen Durchgangsquerschnitt begrenzt, der kleiner ist als ein Querschnitt des Bundes, und dass die Zunge einen Vorsprung (20) aufweist, der mit einem Profil (9) der Wand (7) der Aufnahme (3) zusammenwirkt, um den Ring in der Eingriffsposition zu halten.

4. Verbinder nach Anspruch 3, bei dem das Profil der Wand (7) der Aufnahme (3) von einem Rand (9) der seitlichen Öffnung (8) geformt ist.

5. Verbinder nach Anspruch 1, bei dem der Schieber (10) in der Rückhalteposition zwischen einer Vcrriegelungsposition, in der der Schieber mit einem Anschlagabschnitt (16) unter eine Kante (9) der seitlichen Öffnung (8) greift, und einer Entriegelungsposition axial beweglich ist, in der der Anschlagabschnitt vom Rand der seitlichen Öffnung freikommt.

6. Verbinder nach Anspruch 1, umfassend Rückhaltemittel an dem Gehäuse, um den Schieber in der Freiabeposition festzuhalten.

7. Verbinder nach Anspruch 6, bei dem der Schieber (10) mit Mitteln (13, 14) für seine Verrastung in dem Gehäuse (2) versehen ist, die so ausgebildet sind, dass der Schieber im Gehäuse in der Rückhalteposition und in der Freigabeposition elastisch gehalten ist.
